# EUROPEAN PATENT APPLICATION

(11) **EP 4 056 542 A1**
(43) Date of publication of application: **14.09.2022**
(21) Application number: 22156462.8
(22) Date of filing: 13.02.2022
(51) Int. Cl.: C05B 1/06, C05B 11/04, C05B 11/10, C05C 5/04, C05D 3/00, C05D 9/02, C05G 3/00

(54) **ODDA PROCESS FOR THE PRODUCTION OF NITROGEN-BASED FERTILIZERS WITH REDUCED SAND FORMATION**

(30) Priority: 13.03.2021 BE 202105190
(71) Applicant: EuroChem Antwerpen, 2040 Antwerpen (BE)
(72) Inventor: Verhelst, Pascal, 2040 Antwerpen (BE); Vancauwenberghe, Alex, 2040 Antwerpen (BE)
(74) Representative: Willnegger, Eva

(57) **Abstract**

The present invention is directed at an ODDA process with an improved lime removal for fertilizer production. In a preferred embodiment, the improved lime removal is obtained by the addition of an ultra-high molecular weight anionic polyacrylamide as flocculant.

## Description

### BACKGROUND

The mineral fertilizers produced by our industry help to feed the fast growing world population. A sufficient and targeted supply of nutrients enables agricultural crops to grow and food to be produced. Approximately 50% of these nutrients come from mineral fertilizers.

Complex mineral fertilisers can be produced via various processes or production routes. An important production step is the conversion of the phosphor from the natural rock phosphate into a plant available form. One of the possible processes to do so is the socalled nitrophosphate route or ODDA process. The ODDA process uses all nutrient components to produce nitrate containing straight and complex fertilisers. Consequently, the ODDA process is an example of intrinsic circular economic principles.

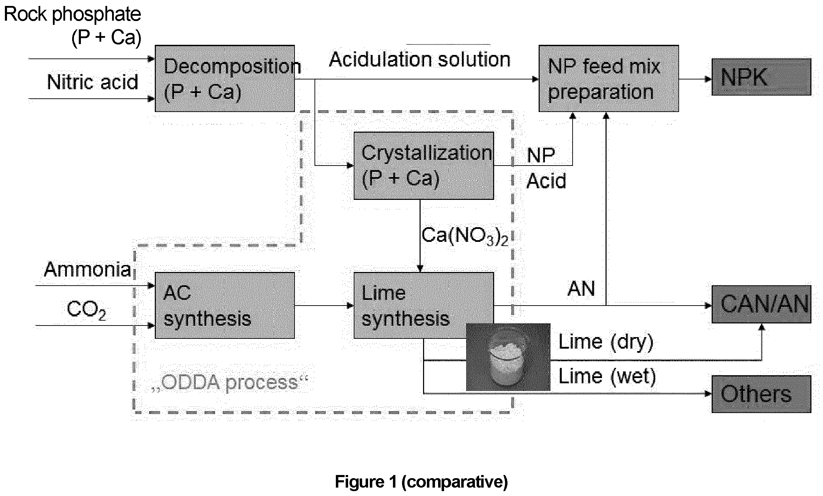

The ODDA process was invented by Erling Johnson in the municipality of Odda in Norway in 1928. Accordingly, the ODDA process has first been described in patent GB339340 to ODDA Smelteverk. The ODDA process is still applied today to produce high volumes of fertilizers in the order of several millions of tons per year. A process flow chart of the reaction of the ODDA process is shown in Figure 1.

The ODDA process involves acidifying phosphate rock with dilute nitric acid to produce a mixture of phosphoric acid and calcium nitrate according to chemical equation 1:

Chemical equation 1: Ca5(PO4)3OH + 10 HNO3 → 3 H3PO4 + 5 Ca(NO3)2 + H2O

Insoluble residues may be removed by filtration. The mixture is then cooled, in general to below 0 °C. The calcium nitrate crystallizes according to chemical equation 2 and can be separated from the phosphoric acid by filtration.

Chemical equation 2: 2 H3PO4 + 3 Ca(NO3)2 + 12 H2O → 2 H3PO4 + 3 Ca(NO3)2·4H2O

The resulting calcium nitrate produces nitrogen fertilizer. The filtrate is composed mainly of phosphoric acid with some nitric acid and traces of calcium nitrate. The filtrate is then neutralized with ammonia to produce a compound fertilizer according to chemical equation 3:

Chemical equation 3: Ca(NO3)2 + 4 H3PO4 + 8 NH3 → CaHPO4 + 2 NH4NO3 + 3(NH4)2HPO4

If potassium chloride or potassium sulfate is added, the result will be NPK fertilizer.

The calcium nitrate can be used as calcium nitrate fertilizer. The calcium nitrate may also be converted into ammonium nitrate and calcium carbonate using carbon dioxide and ammonia according to chemical equation 4:

Chemical equation 4: Ca(NO3)2 + 2 NH3 + CO2 + H2O → 2 NH4NO3 + CaCO3

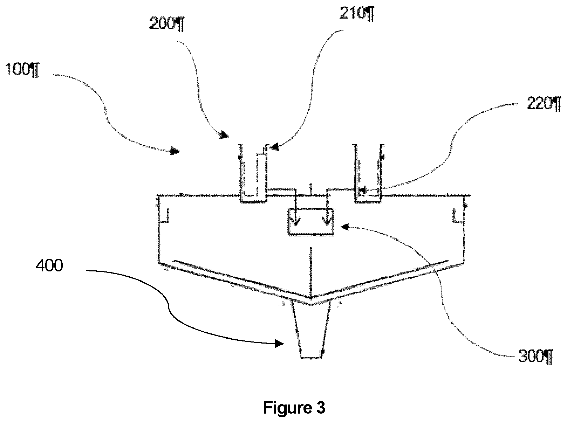

The liquid of this last step according to chemical equation 4 is then transported to a sedimentation vessel, commonly referred to as thickener. An exemplary embodiment of a thickener is shown in Figure 3. CaCO3 precipitates from the reaction mixture obtained by chemical equation 4 in the thickener. This precipitation of the CaCO3 separates the NH4NO3 from the CaCO3. However, the overflow liquid of the thickener still contains CaCO3 or simply lime. This residual lime in the overflow liquid of the thickener is a technical challenge for following three reasons:
Firstly, the pH of the liquid in the thickener is around 7. The liquid in the thickener comprises a small amount dissolved ammonium carbonate which is required in the conversion reactors. In the conversion reaction, an excess of ammonium carbonate enables the crystallization of lime as calcite as opposed to aragonite or vaterite. Only calcite crystals can be easily filtrated. On the other hand, AN is an acidic salt with a pH of 5. So the AN-solution has to be acidulated to pH 5 with nitric acid. The ammonium carbonate will form AN, water and CO2, all lime present will convert to Ca(NO3)2, water and CO2.

Secondly, in the AN-evaporation section, AN is concentrated from 65% to 94%. If lime is present in the AN, it accumulates in the falling film evaporators. The accumulated lime reduces the heat exchange capability at first and finally leads to entire blockage of the evaporators.

Thirdly, lime in the overflow of the thickener will negatively interfere with AN/CAN granulation.

Traditionally, the CaCO3 in the reaction mixture obtained by chemical equation 4 has been removed by sedimentation and by filtration, in particular by pressure filtration. However, pressure filtration involves high maintenance costs. Examples include material fatigue and damage through bent filter frames, or ripped filtration cloths. Finally, the manual exchange of the filters for maintenance can be time consuming and expensive, hazardous for the workers and causes substantial process downtime.

Accordingly, the objective of this invention is an improved method for CaCO3 removal from the from the ammonium-nitrate containing liquid obtained by chemical equation 4.

Flocculation, also referred to as agglomeration, coagulation or coalescence, is a process of contact and adhesion whereby the particles of a dispersion form clusters. Flocculants are known to facilitate precipitation of dissolved or suspended compounds. Accordingly, flocculants are used in a wide variety of chemical processes.

EP2555846 to BASF discloses an improved process of forming an aqueous suspension of solid particles by gravity sedimentation of a first aqueous suspension of solid particles in a vessel. At least one organic polymeric flocculant is added to the suspension. A free radical or oxidising agent is then added to the flocculated solids in order to form a second aqueous suspension.

EP1976613 to Ciba discloses a process of concentrating an aqueous suspension of solid particles comprising the steps of adding at least one organic polymeric flocculant to the suspension. The flocculated solids form a layer of solids. A free radical agent, oxidising agent, or enzyme is applied to the suspension prior to or substantially simultaneously with adding the organic polymeric flocculant. The organic polymeric flocculant may be homopolymer of sodium acrylate, the homopolymer of acrylamide and the copolymer of acrylamide and sodium acrylate.

US4104226 to BASF describes a mixed polyacrylamide composition with improved retention aid and flocculant properties. The composition consists essentially of a mixture of cationic and anionic polyacrylamides in the form of a water-in-oil polymer dispersion containing.

WO9937589 to Ciba discloses a process of thickening an aqueous suspension of mineral solids, in particular coal, by sedimentation. A water-soluble anionic bridging polymeric flocculant with an intrinsic viscosity of at least 5 dl/g (99%) and a water-soluble cationic polymeric flocculant (1 %) are added to the suspension. The total polymer concentration is is generally from about 0.001 to about 5 wt%.

However, none of the above mentioned documents describes an effective solution for the removal of CaCO3 from NH4NO3 obtained according to equation 4 of the ODDA process for fertilizer production.

### SHORT DESCRIPTION OF THE INVENTION

The inventors now have surprisingly found that the addition of less than 5 ppm of an ultrahigh molecular weight anionic polyacrylamide as flocculant leads to an effective and complete removal of CaCO3 from the NH4NO3 obtained according to chemical equation 4 in high volume applications of the ODDA process for fertilizer production.

Accordingly, a first aspect of the invention is an ODDA process for the production of nitrogen-based fertilizers comprising the steps of
a) Acidifying rock phosphate with a nitric acid solution to produce an acidulation solution according to chemical equation 1:

   Ca5(PO4)3OH + 10 HNO3 → 3 H3PO4 + 5 Ca(NO3)2 + H2O
b) Cooling the acidulation solution of step a) to temperature that allows for the crystallization of calcium nitrate according to chemical equation 2:

   2 H3PO4 + 3 Ca(NO3)2 + 12 H2O → 2 H3PO4 + 3 Ca(NO3)2·4H2O
c) Optionally nneutralizing the reaction mixture of step b) with ammonia to produce a mixture of ammonium phosphate, calcium phosphate and ammonium nitrate according to chemical equation 3:

   Ca(NO3)2 + 4 H3PO4 + 8 NH3 → CaHPO4 + 2 NH4NO3 + 3(NH4)2HPO4
d) Converting the calcium nitrate obtained in step b) into ammonium nitrate and calcium carbonate using carbon dioxide and ammonia according to chemical equation 4:

   Ca(NO3)2 + 2 NH3 + CO2 + H2O → 2 NH4NO3 + CaCO3
e) Separating the calcium carbonate from the ammonium nitrate in a sedimentation vessel (100), wherein a flocculant is added to the sedimentation vessel (100) of step e) to improve the precipitation of calcium carbonate in the sedimentation vessel (100).

In another embodiment, the addition of the flocculant is added to the sedimentation vessel (100) of step e) leads to a substantially complete precipitation of calcium carbonate in the sedimentation vessel (100). In a preferred embodiment, a substantially complete precipitation of the calcium carbonate means a precipitation of 95 w%, preferably 99 w% even more preferably of 99,9 w% and even more preferably of 99,99 w% of the calcium carbonate in the sedimentation vessel (100).

In another preferred embodiment the overflow of the sedimentation vessel (100) comprises CaCO3 in an amount of 0,001 to 0,5 w%, preferably from 0,005 to 0,01 and even more preferably from 0,01 to 0,05 w% as compared to the total reference overflow of the sedimentation vessel (100). In another preferred embodiment, no filtration and in particular no pressure filtration is applied in step e of the present invention.

In another embodiment of the process of the invention, the flocculant is an organic flocculant.

In another embodiment of the process of the invention, the flocculant is an organic polymeric flocculant.

In another embodiment of the process of the invention, the flocculant is an anionic organic polymeric flocculant

In another embodiment of the process of the invention, the flocculant is an ultrahigh polymer weight anionic organic polymeric flocculant

In another embodiment of the process of the invention, the molecular weight of the flocculant is 2 million Daltons or more.

In another embodiment of the process of the invention, the molecular weight of the flocculant is 20 million Daltons or less.

In a preferred embodiment, the flocculant is an polyacrylamide flocculant.

In a further preferred embodiment, the polyacrylamide flocculant is an ultrahigh molecular weight polyacrylamide.

In particularly preferred embodiment, the flocculant is Magnafloc^{®} commercially available from BASF.

In a further preferred embodiment, the flocculant is Magnafloc^{®} 919 commercially available from BASF.

In a further preferred embodiment, the process step e) comprises the addition of an ultrahigh molecular weight anionic polyacrylamide flocculant.

In a further preferred embodiment, no other agent as added for purposes for flocculation in process step d) of the present invention.

In another embodiment, the flocculant does not comprise any free radical agents nor oxidizing agents.

In another embodiment, the flocculant does not comprise any cationic polymer.

In another embodiment of the process of the invention, the flocculant is added in a concentration of 0.1 ppm to 10 ppm as compared to the volume of the reaction mixture in the sedimentation vessel (100) of step e).

In another embodiment of the process of the invention, the flocculant is added in a concentration of 0.5 ppm to 5 ppm as compared to the volume of the reaction mixture in the sedimentation vessel (100) of step e).

In another embodiment of the process of the invention, the flocculant is added in a concentration of 1 ppm to 3 ppm as compared to the volume of the reaction mixture in the sedimentation vessel (100) of step e).

In another embodiment of the process of the invention, the flocculant is added in a concentration of 1.3 ppm to 2 ppm as compared to the volume of the reaction mixture in the sedimentation vessel (100) of step e).

In another embodiment of the process of the invention, the flocculant is added to the sedimentation vessel (100) prior to the reaction mixture of step d) enters the sedimentation vessel (100).

In another embodiment of the process of the invention, the flocculant is added to a pre-sedimentation vessel (200) prior to the reaction mixture of step d) enters the sedimentation vessel (100).

In another embodiment of the process of the invention, the pre-sedimentations vessels (200) are conically shaped hollow bodies with one or more entrance apertures (210) and one or more exit apertures (220).

In another embodiment of the process of the invention, the flocculant is added to two pre-sedimentation vessels (110).

Another aspect of the present invention is the use of ultrahigh weight anionic organic polymeric flocculant to improve the removal of calcium carbonate in the sedimentation vessel (100) of step e) of the ODDA process from the reaction mixture obtained by chemical equation 4.

### DETAILED DESCRIPTION OF THE INVENTION

### SHORT DESCRIPTION OF THE DRAWINGS

Figure 1 shows a flow chart of the ODDA process according to the state of the art.
Figure 2 shows a flow chart of the ODDA process according to the present invention.
Figure 3 shows a schematic embodiment of the sedimentation vessel (100) with two pre-sedimentation vessels (200).

### DETAILED DESCRIPTION OF THE DRAWINGS

Figure 1 shows a flow chart of the ODDA process for the production of nitrogen-based fertilizers according to the state of the art comprising the steps of
a) Acidifying rock phosphate with a nitric acid solution to produce an acidulation solution according to chemical equation 1:

   Ca5(PO4)3OH + 10 HNO3 → 3 H3PO4 + 5 Ca(NO3)2 + H2O
b) Cooling the acidulation solution of step a) to temperature that allows for the crystallization of calcium nitrate according to chemical equation 2:

   2 H3PO4 + 3 Ca(NO3)2 + 12 H2O → 2 H3PO4 + 3 Ca(NO3)2·4H2O
c) Optionally nneutralizing the reaction mixture of step b) with ammonia to produce a mixture of ammonium phosphate, calcium phosphate and ammonium nitrate according to chemical equation 3:

   Ca(NO3)2 + 4 H3PO4 + 8 NH3 → CaHPO4 + 2 NH4NO3 + 3(NH4)2HPO4
d) Converting the calcium nitrate obtained in step b) into ammonium nitrate and calcium carbonate using carbon dioxide and ammonia according to chemical equation 4:

   Ca(NO3)2 + 2 NH3 + CO2 + H2O → 2 NH4NO3 + CaCO3
e) Separating the calcium carbonate from the ammonium nitrate in a sedimentation vessel (100).

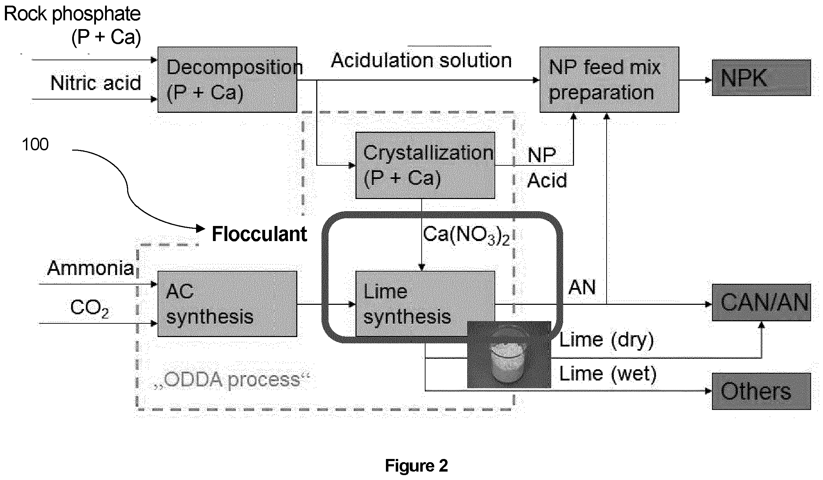

Figure 2 shows the process of the invention with improved lime removal comprising the steps of
a) Acidifying rock phosphate with a nitric acid solution to produce an acidulation solution according to chemical equation 1:

   Ca5(PO4)3OH + 10 HNO3 → 3 H3PO4 + 5 Ca(NO3)2 + H2O
b) Cooling the acidulation solution of step a) to temperature that allows for the crystallization of calcium nitrate according to chemical equation 2:

   2 H3PO4 + 3 Ca(NO3)2 + 12 H2O → 2 H3PO4 + 3 Ca(NO3)2·4H2O
c) Optionally nneutralizing the reaction mixture of step b) with ammonia to produce a mixture of ammonium phosphate, calcium phosphate and ammonium nitrate according to chemical equation 3:

   Ca(NO3)2 + 4 H3PO4 + 8 NH3 → CaHPO4 + 2 NH4NO3 + 3(NH4)2HPO4
d) Converting the calcium nitrate obtained in step b) into ammonium nitrate and calcium carbonate using carbon dioxide and ammonia according to chemical equation 4:

   Ca(NO3)2 + 2 NH3 + CO2 + H2O → 2 NH4NO3 + CaCO3
e) Separating the calcium carbonate from the ammonium nitrate in a sedimentation vessel (100), wherein a flocculant is added to the sedimentation vessel (100) of step e) to improve the precipitation of calcium carbonate in the sedimentation vessel (100).

Figure 3 shows a preferred embodiment wherein the sedimentation vessel (100) is cylinder shaped. The reaction product obtained step d according to chemical equation 4 enters the sedimentation vessel (100) through the pre-sedimentation vessels (200). The passing through the pre-sedimentation vessels (200) slows down the speed and thus facilitates gravity sedimentation in the sedimentation vessel (100). The pre-sedimentation vessels are conically shaped hollow bodies with one or more entrance apertures (210) and one or more exit apertures (220). The flocculant is added to the pre-sedimentation vessels (200). The thickened solution that leaves the thickener at the bottom (400) is the feed of a vacuum belt filter. The AN-solution is passed through a filter cloth. A lime cake is built on the filtration cloth. Thus, the thickener reduces the volume that needs to be filtered and provides a thick cake on the vacuum belt filter. The overflow of the thickener does not need to be filtrated thanks to the addition of the flocculent according to step e).

In a preferred embodiment, the one or more pre-sedimentation vessels (200) contain a sieve to prevent coagulated limestone from entering the thickener (100). In another embodiment, the one or more pre-sedimentation vessels (200) comprise one or more stirrers. In another embodiment, the one or more pre-sedimentation vessels (200) comprise one or more baffles. In a particularly preferred embodiment, the pre-sedimentation vessels (200) comprise one or more stirrers, one or more baffles and one or more sieves (not shown in Figure 3). The one or more pre-sedimentation vessels (200) prevent the limestone that is constantly building on the walls, baffles and stirrer from entering the sedimentation vessel (100). The stirrers (not shown) enable a quick and efficient mixed with the solution leaving the reactors. Consequently, the one or more pre-sedimentation vessels (100) are the preferred place for the addition of the flocculent according to step e).

### Examples

20 organic polymeric flocculants were added to the sedimentation vessels (100) shown in Figure 2 and Figure 3. The tested flocculants comprised both
▪ anionic flocculants ranging from medium to ultrahigh molecular weight anionic flocculants; and
▪ cationic flocculants ranging from medium to ultrahigh molecular weight anionic flocculants.

The tested anionic and cationic flocculants were added in quantities ranging from 0.1 to 20 ppm as compared to the volume of the reaction mixture obtained according to equation 4 in the sedimentation vessel (100).

The CaCO3 contained in the overflow of sedimentation vessel (100) was measured. Surprisingly, a anionic ultrahigh molecular weight polyacrylamide commercially available under the brand Magnafloc^{®} from BASF and added in very low quantities of 1.6 ppm as compared to the total liquid in the sedimentation vessel (100) produced an overflow essentially free of CaCO3.

Table of abbreviations and expressions used in the drawings for ease of understanding and translation purposes:

| **Chemical formula** | **English meaning** | **Translation** |
|---|---|---|
| | ODDA process | |
| | comparative | |
| (P + Ca) | Rock phosphate | (P + Ca) |
| NO3 = NA | Nitric acid | NO3 = NA |
| | Decomposition | |
| | Acidulation solution | |
| | Crystallization | |
| NP | Nitrogen phosphate | NP |
| | Feed mix preparation | |
| NPK | Nitrogen phosphate kalium | NPK |
| | Crystallization | |
| | Acid | |
| Ca(NO3)2 | Calcium nitrate | Ca(NO3)2 |
| | Lime synthesis | |
| AN | Ammonium nitrate | AN |
| CAN | Calcium ammonium nitrate | CAN |
| | Lime (dry) | |
| | Lime (wet) | |
| | Others | |
| | Ammonia | |
| CO2 | Carbondioxide | CO2 |

## Claims

1. ODDA process for the production of nitrogen-based fertilizers comprising the steps of
a) Acidifying rock phosphate with a nitric acid solution to produce an acidulation solution according to chemical equation 1:
Ca5(PO4)3OH + 10 HNO3 → 3 H3PO4 + 5 Ca(NO3)2 + H2O
b) Cooling the acidulation solution of step a) to temperature that allows for the crystallization of calcium nitrate according to chemical equation 2:
2 H3PO4 + 3 Ca(NO3)2 + 12 H2O → 2 H3PO4 + 3 Ca(NO3)2·4H2O
c) Optionally neutralizing the reaction mixture of step b) with ammonia to produce a mixture of ammonium phosphate, calcium phosphate and ammonium nitrate according to chemical equation 3:
Ca(NO3)2 + 4 H3PO4 + 8 NH3 → CaHPO4 + 2 NH4NO3 + 3(NH4)2HPO4
d) Converting the calcium nitrate obtained in step b) into ammonium nitrate and calcium carbonate using carbon dioxide and ammonia according to chemical equation 4:
Ca(NO3)2 + 2 NH3 + CO2 + H2O → 2 NH4NO3 + CaCO3
e) Separating the calcium carbonate from the ammonium nitrate in a sedimentation vessel (100), wherein a flocculant is added to the sedimentation vessel (100) of step e) to improve the precipitation of calcium carbonate in the sedimentation vessel (100).

2. Process according to claim 1, wherein the flocculant is an organic flocculant.

3. Process according to any of the preceding claims, wherein the flocculant is an organic polymeric flocculant.

4. Process according to any of the preceding claims, wherein the flocculant is an anionic organic polymeric flocculant

5. Process according to any of the preceding claims, wherein the flocculant is an ultrahigh polymer weight anionic organic polymeric flocculant

6. Process according to any of the preceding claims, wherein the molecular weight of the flocculant is 2 million Daltons or more.

7. Process according to any of the preceding claims, wherein the molecular weight of the flocculant is 20 million Daltons or less.

8. Process according to any of the preceding claims, wherein the flocculant is added in a concentration of 0.1 ppm to 10 ppm as compared to the volume of the reaction mixture in the sedimentation vessel (100) of step e).

9. Process according to any of the preceding claims, wherein the flocculant is added in a concentration of 0.5 ppm to 5 ppm as compared to the volume of the reaction mixture in the sedimentation vessel (100) of step e).

10. Process according to any of the preceding claims, wherein the flocculant is added in a concentration of 1 ppm to 3 ppm as compared to the volume of the reaction mixture in the sedimentation vessel (100) of step e).

11. Process according to any of the preceding claims, wherein the flocculant is added in a concentration of 1.3 ppm to 2 ppm as compared to the volume of the reaction mixture in the sedimentation vessel (100) of step e).

12. Process according to any of the preceding claims, wherein the flocculant is added to the sedimentation vessel (100) prior to the reaction mixture of step d) enters the sedimentation vessel (100).

13. Process according to any of the preceding claims, wherein the flocculant is added to one or more pre-sedimentation vessels (200) prior to the reaction mixture of step d) enters the sedimentation vessel (100).

14. Process according to any of the preceding claims, wherein the pre-sedimentations vessels (200) are conically shaped hollow bodies with one or more entrance apertures (210) and one or more exit apertures (220).

15. Process according to claim 13, wherein the flocculant is added to two pre-sedimentation vessels (110).
